Europäisches Patentamt

European Patent Office

Office européen des brevets

(19)

(11) EP 0 724 728 B1

(12) **EUROPEAN PATENT SPECIFICATION**

(45) Date of publication and mention
of the grant of the patent:
**08.12.1999 Bulletin 1999/49**

(51) Int Cl.6: **G01S 3/786**

(86) International application number:
**PCT/US93/10040**

(21) Application number: **94900366.9**

(22) Date of filing: **20.10.1993**

(87) International publication number:
**WO 95/11457 (27.04.1995 Gazette 1995/18)**

(54) **SIGNAL METRIC ESTIMATOR**

SIGNALMETRIKABSCHÄTZER

ESTIMATEUR DE VALEUR METRIQUE DE SIGNAUX

(84) Designated Contracting States:
**BE DE FR GB IT**

(43) Date of publication of application:
**07.08.1996 Bulletin 1996/32**

(73) Proprietor: **HONEYWELL INC.**
**Minneapolis Minnesota 55408 (US)**

(72) Inventors:
  • **SADJADI, Firooz, A.**
    **St. Anthony, MN 55418 (US)**
  • **BAZAKOS, Mike, E.**
    **Bloomington, MN 55438 (US)**
  • **NASR, Hatem**
    **Houston, TX 77043 (US)**

(74) Representative: **Herzbach, Dieter, Dipl.-Ing. et al**
**Honeywell Holding AG,**
**Patent- und Lizenzabteilung,**
**Kaiserleistrasse 39**
**63067 Offenbach am Main (DE)**

(56) References cited:
**US-A- 5 123 057**

• **OPTICAL ENGINEERING., vol.30, no.2, February
1991, BELLINGHAM US pages 183 - 188,
XP173774 F. A. SADJADI, H. NASR, H. AMEHDI,
M. BAZAKOS 'knowledge- and model-based
automatic target recognition algorithm
adaptation'**
• **OPTICAL ENGINEERING., vol.30, no.3, March
1991, BELLINGHAM US pages 254 - 258,
XP179486 NOAH ET AL. 'background
characterization techniques for target detection
using scene metrics and pattern recognition'**

## Description

BACKGROUND OF THE INVENTION

The present invention relates to signal and image processing systems such as Automatic Target Recognition (ATR) systems used for target classification and target tracking and Automatic Object Recognition (AOR) systems. The input to these ATR systems could be signals or images of scenes collected from Electro-Optical (EO) sensors, or Radar (RF) sensors or other signal or image generating sensors.

In signal and image processing systems, the signal metrics are the measures of the quality of the signal and consequently they convey information about the scene, the objects in the scene, the sensor, the signal transmission path, and the environmental conditions under which the signal was obtained. These metrics may be divided into the classes of Global Metrics, Local Metrics and Object or Target Metrics. The scene complexity is an example of the Global Metrics. An example of the local metrics is the contrast ratio between objects in the scene and their immediate backgrounds. Target entropy is an example of the object metrics.

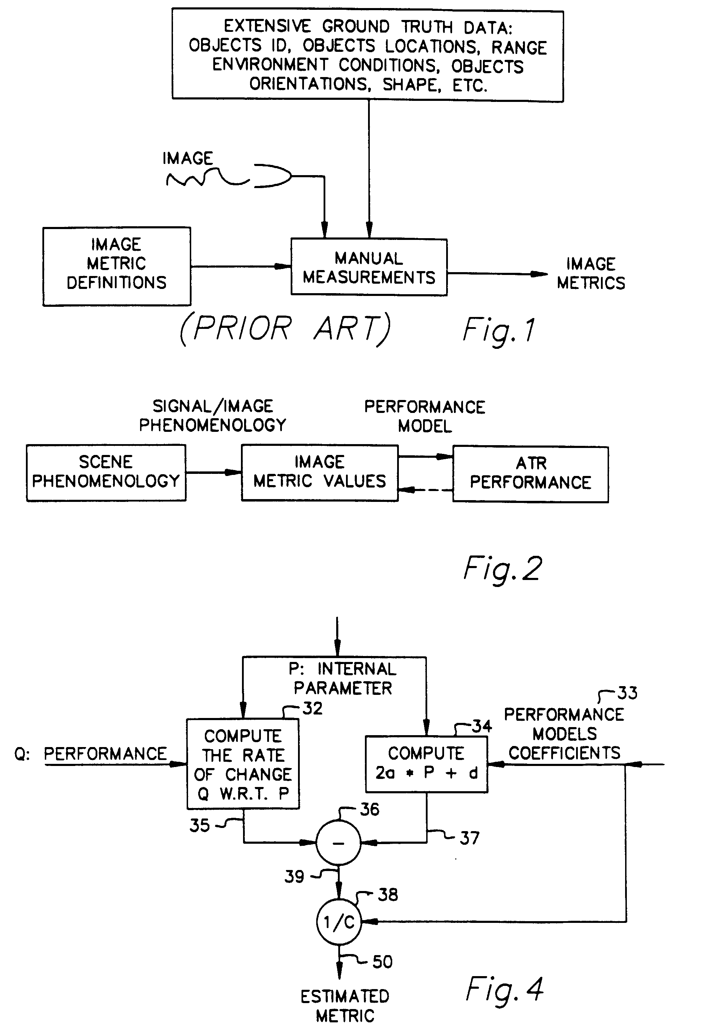

It is to be understood that the signal metrics is a more generic term than image metrics and that the principles of the present invention apply to both signal metrics and image metrics even though specific examples will be given in terms of image metrics. In the past the approach used to arrive at the image metrics was a manual approach as illustrated in Fig. 1. In this approach one examines the signal or image for the case of two-dimensional signals and through the use of extensive ground truth information identifies all of the knowable aspects of the scene. The knowable aspects include, for example, the location of the objects in the scene, the type targets or objects and their orientation, the range from the sensor to the objects and to the various regions in the image and other knowable aspects of the scene. The image metrics are then computed in an organized fashion by examining each object separately. An example of a local metric is Target Interference Ratio (TIR) squared. The approach to calculating (TIR) begins by placing a minimum bounding rectangle (MBR) around each object. The metric $(TIR)^2$ is defined as the squared ratio of the difference between the average of target intensity value and the average intensity value of the background as obtained in a rectangular box twice the size of the MBR that surrounds the MBR, and the variance of the intensity values of the background. It should be obvious that to obtain the metrics as just described requires tedious and extensive ground truthing and manual computation. These requirements make the manual computation tedious in the best situations where the extensive ground truth data is available. In the real world situation the above described approach is impractical because the location of the targets and their identities are unknown.

In the past large sets of data have been collected with AOR systems; however it has not been practical to communicate the important features of this data to other users of AOR systems so that useful collected data could be exchanged. This is because the data has not been characterized. In the past this characterization could only be done by the tedious ground truthing process already described.

SUMMARY OF THE INVENTION

The present invention solves these and other needs by providing estimated signal metrics without requiring direct computation of the signal metrics. It is not necessary to relate images to ground truth information to determine the estimated metrics.

The present invention utilizes an ATR and estimates the ATR performance from the ATR output or ATR observables and a minimum amount of ancillary data. For example ancillary data may include the number of detected targets, the hypothesized type of targets, and the estimated range to the center of field of view. Performance models provide the ATR performance as a function of ATR parameters and metrics. The present invention inverts the performance models by differentiating the performance models with respect to algorithm parameters. Then by using the value for the rate of change of the variation of performance with respect to an algorithm parameter as determined by varying an ATR parameter, the value for the parameter and the coefficients of the performance models, the signal metrics associated with the signal are estimated.

BRIEF DESCRIPTION OF THE DRAWINGS

Figure 1 illustrates the manual approach of the prior art to computing image metrics.

Figure 2 illustrates the automated approach for metric computation of the present invention.

Figure 3 illustrates in block diagram form the signal or image metric estimator of the present invention.

Figure 4 illustrates the metric estimator portion of the present invention.

DETAILED DESCRIPTION OF THE PREFERRED EMBODIMENT

A Knowledge and Model Based Adaptive Signal Processor (KMBASP) is described in U.S. Patent 5,018,215 which was issued on May 21, 1991 and is assigned to the same assignee as the present invention. In the Knowledge and Model Based Adaptive Signal Processor (KMBASP) the performance model was estimated as a quadratic polynomial which is consistent with extensive experience with the performance of many targeting systems. The coefficients of the polynomial were determined by fitting the model to empirical data.

A set of three such performance models for Probability of Detection (PD), False Alarm Rate (FAR), and Segmentation Accuracy (SA) were developed as part of the KMBASP models. In these models three targeting system parameters and three image metrics were used. The ATR system under consideration is the Multi-function Target Acquisition Processor (MTAP) system. The image metrics used were selected based on previous experience and included the results obtained in the PAIRSTECH project. These metrics are: Target Interference Ratio squared $(TIR)^2$ as a measure of the local contrast of the targets; Edge Strength Ratio (ESR), as a measure of quality of the target edges; and target range in the form of number of pixels on target.

Fig. 1 simply illustrates the signal or image metrics concept.

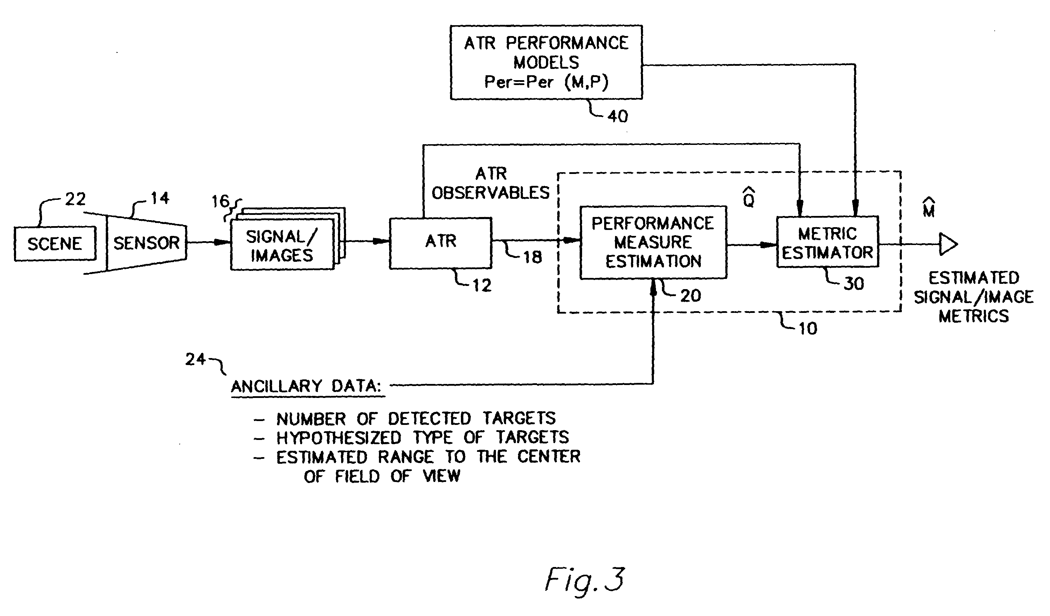

A Signal Metric Estimator (SME) is shown in the drawings and generally designated 10. Fig. 3 shows integration of SMF 10 with ATR system 12. Sensor 14 provides sensory data or images 16 of scene 22 to ATR 12. ATR 12 receives a group of sequential signals or images 16 and provides ATR observables 18 to SME 10. SME 10 includes two major functional modules Performance Measure Estimator 20 and Metric Estimator 30. Ancillary Data Module 24 provides non-sensory informational scene data such as the number of detected targets, hypothesized type of targets, and estimated range to the center of field of view to performance measure estimator 20. Sensory data is defined as data obtained from the signal for image producing apparatus and non-sensory data is data not obtained from the signal or image producing apparatus.

The operation of Performance Estimator 20 will now be described. After a few (typically 5 to 10) images are processed by ATR 12 for a fixed set of algorithms, then a set of performance measures are estimated from the output of ATR 12. Examples of performance measures are probability of detection (PD) and False Alarm Rate (FAR). In addition, the AOR output provides the estimated target locations, their labels and aspect angles.

For illustration purposes assume that the ancillary data indicates that 10 targets are present in the scene and that after performance estimator 20 has processed a few frames, it determines that 8 objects have been successfully tracked. This determination is made by using only the motion of the objects i.e. there is no ground truth available. The AOR may be operating at up to 30 image frames per second and it may require that an object be tracked in 27 out of 30 frames to be classified as an object. By successfully tracked it is meant that the frequency of the object being tracked has exceeded a threshold value so that the object is classified as a target. In this illustration, the PD would be 0.8. Note that for this estimation, multiple runs of data are used. If the ATR is a single frame processor the output of classifier or recognition modules are used to estimate the performance measures. In summary the ATR performance is estimated by using: 1) Frequency of a target being tracked exceeding a threshold value level, 2) objects that are estimated to be true detects should be classified as belonging to the same class of targets on "majority" of times, i.e., frequency of belonging to the same class exceeds a threshold value.

It should be noted that there are several types of errors that may occur in this performance measure estimation: 1) When a target is missed and never acquired or acquired very infrequently, e.g., it is below the set threshold, 2) when a false target is declared a true target by passing all of the true target tests. It is therefore important to set the test requirements in such a way as to reduce errors 1 and 2.

Performance models 40 are mathematical models that have been obtained empirically. U.S. Patent 5,018,215 describes the development of robust performance models for the Multi Function Target Acquisition Processor (MTAP) detection and segmentation modules. These models can be generally represented as the following:

$$Q = Per = Per\ (M,P) \qquad (1)$$

where

Q stands for Performance Measures
Per stands for Performance Measures,
M stands for Image metrics
P stands for algorithm parameters

The present invention is concerned with using relationship (1) to obtain the image or signal metric (M) as a function of Performance Measures (Q) and Parameters (P). In U.S. Patent 5,018,215 the performance model was estimated as a quadratic polynomial which is consistent with the inventors experience with many targeting systems performance. For illustration purposes, let Q be a quadratic function of P and M, which for simplicity we assume to be scalars. Then

$$Q = aP^2 + bM^2 + cPM + dP + eM + f$$

where a, b, c, d, e and f are real coefficients

By taking a partial derivative of Performance measure (Q) with respect to Parameter (P),

$$M = \frac{\frac{\delta Q}{\delta P} - 2aP - d}{c}$$

when c is not zero, which is the case for our BACORE models. Where BACORE is the detector, segment or module of MTAP. Thus M can be obtained from an estimate of

$$\frac{\delta Q}{\delta P}$$

at specific values of P, given the coefficients of the model.

The determination of the partial derivative according to the present invention is determined numerically as illustrated in Fig. 4. Rate of change submodule 32 has as its input, Estimated Performance of ATR 12, and an internal parameter (P). The procedure is to vary an internal parameter (P) by a small amount ($\Delta T$)). Submodule 32 then computes the rate of change of ATR 12 performance with respect to P. Coefficient submodule 34 has as its input internal parameter (P) and performance model coefficients. Performance model coefficients are determined from performance models. Performance models are mathematical surfaces that have been determined empirically and represent the performance of the AOR of interest For example if the performance measure of interest is segmentation accuracy (SA), then a model of segmentation accuracy as a function of certain parameters and metrics is needed. Performance models such as those described in U.S. Patent 5,018,215 could be used or other performance models having fewer coefficients may be used in the present invention.

Coefficient submodule 34 performs the multiplication of coefficient 2a times parameter P and adds the result to coefficient d to provide output 37. The value of P used is the value before P is varied by $\Delta T$). Submodule 36 subtracts output 37 from the rate of change of Q with respect to P from rate of change module 32 and provides output 39. Submodule 38 divides output 39 of submodule 36 by coefficient c to provide the estimated metric 50.

The present invention has been described in terms of scalar models for ease of understanding. Those of ordinary skill in the art will understand that the principles of the present invention easily can be extended to vector models.

Now that the basic operation of Signal Metric Estimator 10 has been set forth, many subtle features and advantages may be set forth and appreciated. For example, while the illustrations used were primarily two-dimensional or image metric examples, the present invention is not limited to image metrics. The concept used in the present invention is valid for other than two-dimensional signals i.e. the invention is applicable to one dimensional signals such as radar and to three-dimensional signals such as obtained from a laser sensor.

The characterization of data is an important application of the present invention. In the past the quality of the collected data could not be communicated to another AOR user, because the data was not characterized. Workers who are developing or experimenting with AOR systems to determine the AOR sensitivity or to compare it to another AOR system or for other experimental purposes have a great need for sensor data. To be useful the sensor data must include information about the data. For example if one wants to prove the performance of a segmentation algorithm, one needs data that has the needed variations for testing a segmentation algorithm. In the past one would have to go through the very expensive collection of data that would have the range of variation needed or to go through each frame of a data tape and perform the characterization manually by the use of ground truth information. The present invention can automatically perform the characterization of the sensor data tape.

Another advantage of Applicants' invention is that it automatically extracts signal or image metrics directly from the ATR output. The present invention will be useful with a variety of sensor types.

In accordance with the foregoing description, applicants have developed a signal metric estimator that may be utilized with automatic target recognition systems or automatic object recognition systems.

Although a specific embodiment of the applicant's invention is shown and described for illustrative purposes, a number of variations and modifications will be apparent to those of ordinary skill in the art. It is not intended that coverage be limited to the disclosed embodiment, but only by the terms of the following claims.

**Claims**

1. A signal metric estimator apparatus comprising:

   automatic target recognition (ATR) means (12) for receiving a plurality of sequential multidimensional signals of a scene, and providing AIR observables, said ATR having a plurality of adjustable parameters;
   ancillary data means (24) for providing non-sensory informational data for said scene;
   performance measure estimating means (20) connected to said AIR means (12) for receiving said AIR observables and connected to said ancillary data means for receiving said non-sensory informational data, said performance estimating means (20) providing a first performance measure estimate for said ATR;
   a first performance model (40) as a function of parameters and metrics, said first performance model having coefficients; characterised by
   means (34) for varying a first parameter of said ATR from a first value to a second value;
   means (32) for determining a rate of change of a variation in said first performance measure estimate as a result of varying said first parameter from a first value to a second value; and
   means (36, 38) for using said first parameter first value, said rate of change of said variation in said first performance measure estimate, said performance model coefficients, and said first performance model (40) to estimate a first metric value.

2. Apparatus according to claim 1 wherein said performance measure estimating means (20) includes means for determining a frequency of a target being tracked exceeding a threshold value.

3. Apparatus according to claim 1 wherein said means for using said first parameter first value includes partial differential means for taking a partial derivative of said first performance model (40) with respect to said first parameter.

4. Apparatus according to claim 1, wherein:

said performance estimating means (20) is comparing said ATR observables to said non-sensory informational target data and said performance measure estimating means (20) is determining the frequency of tracking of a predicted target, from which said performance measure estimating means (20) is providing a first performance measure estimate for said ATR; and
said first performance model (40) being a quadratic function of a first parameter of said ATR and of a first metric.

**Patentansprüche**

1. Signalmetrik-Schätzvorrichtung, aufweisend:

eine automatische Zielerkennungs (ATR)-Einrichtung (12) zum Empfang mehrerer sequentieller mehrdimensionaler Szenensignale und zur Vorgabe von ATR-Wahrnehmungen, wobei die ATR mehrere einstellbare Parameter besitzt;
eine Ergänzungsdaten-Einrichtung (24) zur Vorgabe von Nichtsensor-Informationsdaten für die Szene;
eine Leistungsmeß-Schätzeinrichtung (20), die an die ATR-Einrichtung (12) angeschlossen ist, um die ATR-Wahrnehmungen zu empfangen und die an die Ergänzungsdaten-Einrichtung angeschlossen ist, um die Nichtsensor-Informationsdaten zu empfangen, wobei die Leistungs-Schätzeinrichtung (20) eine erste Leistungs-Meßschätzung für die ATR vorgibt;
ein erstes Leistungsmodell (40) in Funktion der Parameter und der Metriken, wobei das erste Leistungsmodell Koeffizienten besitzt, **gekennzeichnet durch** eine Einrichtung (32) zum Verändern eines ersten Parameters der ATR von einem ersten Wert zu einem zweiten Wert;

eine Einrichtung (32) zur Bestimmung einer Änderungsrate einer Veränderung in der Leistungsmeß-Schätzung infolge der Veränderung des ersten Parameters von einem ersten Wert zu einem zweiten Wert; und
eine Einrichtung (36,38) zur Verwendung des ersten Parameters des ersten Wertes der Änderungsrate der Veränderung in der ersten Leistungsmeß-Schätzung, der Leistungsmodell-Koeffizienten und des ersten Leistungsmodelles (40). um einen ersten Metrikwert abzuschätzen.

2. Vorrichtung nach Anspruch 1, wobei die Leistungsmeß-Schätzeinrichtung (20) Mittel umfaßt zur Bestimmung einer Frequenz eines verfolgten Zieles. die einen Schwellwert überschreitet.

3. Vorrichtung nach Anspruch 1, wobei die Einrichtung zur Verwendung des ersten Parameters des ersten Wertes eine partielle Differentialeinrichtung umfaßt für die Aufnahme einer partiellen Ableitung des ersten Leistungsmodelles (40) in Bezug auf den ersten Parameter.

4. Vorrichtung nach Anspruch 1, wobei:

die Leistungsschätzeinrichtung (20) die ATR-Wahrnehmungen mit den Nichtsensor-Informations-Zieldaten vergleicht und die Leistungsmeß-Schätzeinrichtung (20) die Verfolgungsfrequenz eines vorhergesagten Zieles bestimmt, woraus die Leistungsmeß-Schätzeinrichtung (20) eine erste Leistungs-Meßschätzung für die ATR vorgibt; und
das erste Leistungsmodell (40) eine quadratische Funktion eines ersten Parameters der ATR und einer ersten Metrik ist.

**Revendications**

1. Appareil d'estimation de valeur métrique de signal comportant :

des moyens (12) d'identification automatique de cible (ATR) destinés à recevoir une pluralité de signaux multidimensionnels séquentiels d'une scène, et délivrer des grandeurs observables d'ATR, ladite ATR ayant une pluralité de paramètres réglables ;
des moyens de données auxiliaires (24) destinés à délivrer des données d'information non sensorielles pour ladite scène ;
des moyens d'estimation de mesure de performance (20) reliés aux dits moyens d'AIR (12) afin de recevoir lesdites grandeurs observables d'ATR et reliés aux dits moyens de données auxiliaires afin de recevoir lesdites données d'information non sensorielles, lesdits moyens d'estimation de performance (20) délivrant une première estimation de mesure de performance pour ladite ATR ;

un premier modèle de performance (40) en tant que fonction de paramètres et de valeurs métriques, ledit premier modèle de performance ayant des coefficients ; caractérisé par

des moyens (34) destinés à modifier un premier paramètre de ladite ATR d'une première valeur à une deuxième valeur ;

des moyens (32) destinés à déterminer une vitesse de changement d'une variation dans ladite première estimation de mesure de performance qui résulte de la variation dudit premier paramètre d'une première valeur à une deuxième valeur ; et

des moyens (36, 38) destinés à utiliser ladite première valeur de premier paramètre, ladite vitesse de changement de ladite variation dans ladite première estimation de mesure de performance, lesdits coefficients de modèle de performance, et ledit premier modèle de performance (40) afin d'estimer une première valeur métrique.

2. Appareil selon la revendication 1, dans lequel lesdits moyens d'estimation de mesure de performance (20) comprennent des moyens destinés à déterminer une fréquence d'une cible suivie qui dépasse une valeur de seuil.

3. Appareil selon la revendication 1, dans lequel lesdits moyens destinés à utiliser ladite première valeur de premier paramètre comprennent des moyens différentiels partiels destinés à obtenir une dérivé partielle dudit premier modèle de performance (40) par rapport audit premier paramètre.

4. Appareil selon la revendication 1, dans lequel lesdits moyens d'estimation de performance (20) comparent lesdites grandeurs observables d'ATR aux dites données d'information non sensorielle de cible et lesdits moyens d'estimation de mesure de performance (20) déterminent la fréquence de la poursuite d'une cible prévue, à partir de laquelle lesdits moyens d'estimation de mesure de performance (20) délivrent une première estimation de mesure de performance pour ladite ATR ; et ledit premier modèle de performance (40) est une fonction quadratique d'un premier paramètre de ladite ATR et d'une première valeur métrique.

EXTENSIVE GROUND TRUTH DATA:
OBJECTS ID, OBJECTS LOCATIONS, RANGE
ENVIRONMENT CONDITIONS, OBJECTS
ORIENTATIONS, SHAPE, ETC.

IMAGE

IMAGE
METRIC
DEFINITIONS

MANUAL
MEASUREMENTS

IMAGE
METRICS

*(PRIOR ART)*     *Fig.1*

SIGNAL/IMAGE
PHENOMENOLOGY

PERFORMANCE
MODEL

SCENE
PHENOMENOLOGY

IMAGE
METRIC VALUES

ATR
PERFORMANCE

*Fig.2*

P: INTERNAL
PARAMETER

Q: PERFORMANCE

COMPUTE
THE RATE
OF CHANGE
Q W.R.T. P

32

COMPUTE
$2a * P + d$

34

33
PERFORMANCE
MODELS
COEFFICIENTS

35

36

$-$

37

39

$1/C$

38

50

ESTIMATED
METRIC

*Fig.4*

Fig.3

ATR PERFORMANCE
MODELS
Per=Per (M,P)
40

ATR
OBSERVABLES

22    14    16

SCENE | SENSOR → SIGNAL/ IMAGES → ATR → PERFORMANCE MEASURE ESTIMATION → $\hat{Q}$ → METRIC ESTIMATOR → $\hat{M}$ → ESTIMATED SIGNAL/IMAGE METRICS

12    18    20    30    10

24
ANCILLARY DATA:

- NUMBER OF DETECTED TARGETS
- HYPOTHESIZED TYPE OF TARGETS
- ESTIMATED RANGE TO THE CENTER
  OF FIELD OF VIEW

EP 0 724 728 B1